# EUROPEAN PATENT APPLICATION

(11) **EP 1 768 130 A2**
(43) Date of publication of application: **28.03.2007**
(21) Application number: 06120807.0
(22) Date of filing: 18.09.2006
(51) Int. Cl.: G11B 27/36

(54) **Data recovery method and system for a data recording**

(30) Priority: 10.02.2006 US 772509 P; 20.09.2005 US 231228
(71) Applicant: MediaTek, Inc, Taiwan (TW)
(72) Inventor: Chao, Chien-Ming, Songshan District, 105 Taipei City (TW); Guo, Huiping 3th Floor, Inf. Ind Base E,, W. Heifei, Anhui (CN); Chen, Hsien-Yung, 112, Beitou District, Taipei City (TW)
(74) Representative: Kewitz, Ansgar

(57) **Abstract**

Data recovery methods for data recording applied to a storage medium. It is determined whether multimedia data is detected on the storage medium. If the multimedia data is detected, detennining whether reconstruction of management information associated with the multimedia data is required for the storage medium according to the checking results. If the reconstruction of the management information is required, a recovery process is executed.

## Description

### CROSS-REFERENCE TO RELATED APPLICATIONS

This application is a Continuation-In-Part of pending U.S. patent application Ser. No. 11/231,228, filed Sep. 20, 2005 and entitled "Data Recording Methods and Systems for Rewritable Disks" and this application claims the benefit of U.S. Provisional Application No. 60/772,509 filed Feb. 10, 2006, filed Month. Date, Year and entitled "Recovery Mechanism for A Recording Due To Power Failure".

This application is related to co-pending application and commonly assigned MTK invention No.05-236, filed as U.S. application Ser. No. / , , entitled "Systems and Methods for Video Recovery capable of Addressing Unexpected Recording Interruptions" filed on , , , and the disclosure(s) of which is/are all hereby incorporated herein by reference.

### BACKGROUND OF THE INVENTION

### Field of the Invention

The present invention relates to a data recording method, and in particular to a data recovery method for a data recording due to power failure of a recording device.

### Description of the Related Art

With the progress of disk recording technology, compact disks (CDs) may not satisfy multimedia storage capacity requirements. Digital versatile disks (DVDs) with higher storage density are thus provided. Recently, rewritable disks, such as DVD-RW or DVD+RW disks conforming to DVD-RW or DVD+RW standards, which allow re-recording data on the same disk, are commonly used.

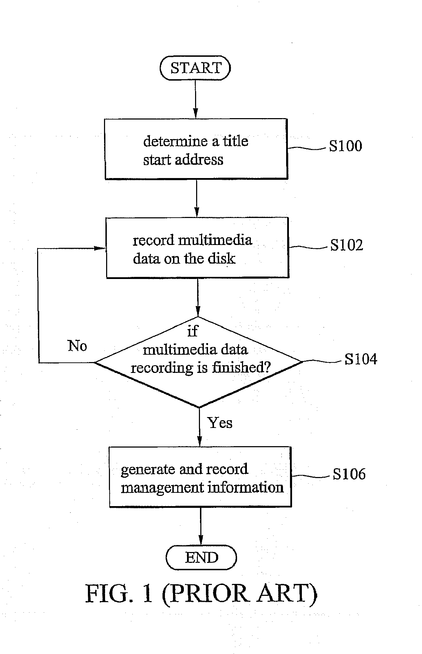

Fig. 1 illustrates a conventional data recording procedure for rewritable disks. When a disk is a recorder, a title start address is determined (step S100). Multimedia data is recorded on the disk according to the title start address (step S102). If the multimedia data recording is finished (step S104), management information is generated and recorded onto the disk (step S106). The management information can be information files containing recording-related information, such as recording time, or recording date.

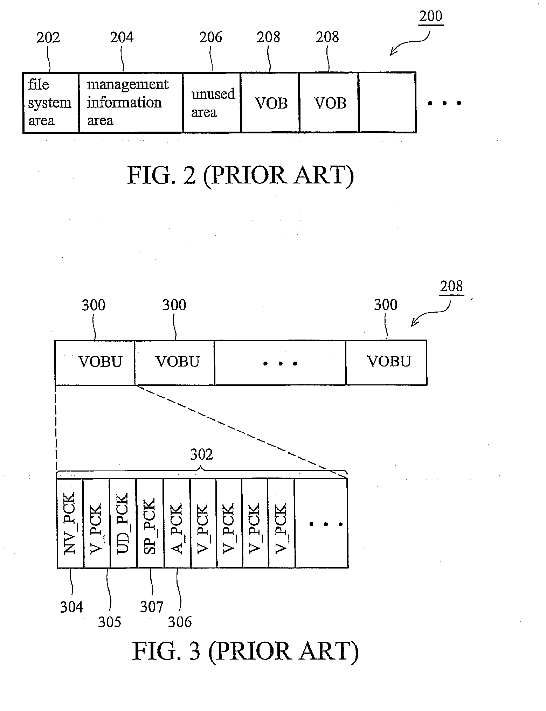

Fig. 2 illustrates an exemplary format of a rewritable disk. A rewritable disk 200 of DVD+RW or DVD-RW standards includes a file system area 202, a management information area 204, and several video object sets (VOBs) 208. The management information generated in step S106 is stored in the file system area 202 and the management information area 204. Multimedia data is recorded in the VOBs 208. Here, area 206 is an unused area on the rewritable disk 200. The unused area 206 can be used to record user-defined information or other recording information according to the DVD-RW or DVD+RW standards.

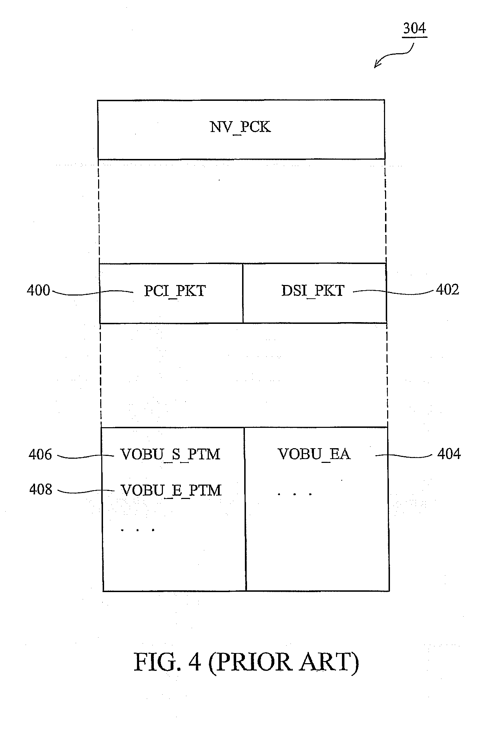

Multimedia data is stored in video object sets (VOB). A VOB 208 includes multiple video object units (VOBUs) 300. Fig. 3 illustrates an exemplary format of a VOBU. Each VOBU 300 has several packs 302, including navigation pack (NV_PCK) 304, video pack (V_PCK) 305, audio pack (A_PCK) 306, and sub-picture pack (SP_PCK) 307. Fig. 4 illustrates an exemplary format of a navigation pack 304. The navigation pack 304 includes program control information (PCI_PKT) 400 for production control, and data search information (DSI_PKT) 402 for special reproduction. PCI_PKT 400 and DSI_PKT 402 contain pack information, such as VOBU relative end address (VOBU_EA) 404, VOBU start play time (VOBU_S_PTM) 406, and VOBU end play time (VOBU_E_PTM) 408.

If multimedia data is completely recorded onto the disk, a title and related information is generated and recorded into the file system area 202 and management information area 204 on the disk. When an unexpected recording termination occurs (for example, due to power failure), the information recorded in the file system area 202 and management information area 204 does not match the recorded video data in the VOBs 208. Thus, the recorded multimedia data cannot be properly reproduced because the title and related information are not complete.

In other words, during the data recording on a recording device, the encoded data streams, such as video data and audio data, are asynchronously burned into a record carrier. Navigation information for the data streams is stored in a volatile memory. When the recording is finished, the navigation information is written into information files underneath the root directory. If the information file is damaged or incomplete, the recording process is useless. In case of a power failure during a recording operation, the navigation structure stored in the volatile memory may be lost, such that a recovery process is required to retrieve the last recording information after resetting a recording device.

U.S. patent application No. 20030014690 discloses a recovery method, comprising the following drawbacks. A non-volatile random access memory must be applied for a recording device. Next, since information pointers are written into the non-volatile random access memory, when the recording device is powered up, it is determined whether a recovery process is implemented to a disk before the disk tray ejects. Alternatively, if the disk tray ejects without the limitation, the information written in the non-volatile random access memory may affect other disks, which may confuse other disks and a recovery process may not be executed. Further, the recovery information is recorded as non-standardized private data streams. The private data streams waste a portion of the available space of a record carrier and may not pass verifications for DVD-VR operations.

A drawback of another recovery method is described. With respect to DVD-Video specifications, data search information (DSI) in VOBU NV packs can be used to forward search VOBUs, and a data recording can thus be precisely executed at a high speed. With respect to DVD-VR operations, DSI is not involved in VOBU RDI packs; such that a next VOBU RDI pack can only be located according to the current VOBU size, resulting in slow recovery speed.

It is desirable to provide another recovery mechanism to avoid the problems in paragraphs [0006] and [0007] for DVD-VR operation.

As described, if multimedia data is completely recorded onto the recordable or rewritable disk, a title and related information are generated and recorded into a management information area and a file system area on a disk. When an unexpected recording condition occurs (the power failure, for example), new management information and file system data cannot be written into the disk. The recorded multimedia data cannot be played due to the incomplete related information.

Thus, an improved recovery method for a data recording is desirable.

### BRIEF SUMMARY OF THE INVENTION

A data recovery method for data recording applied to a recordable disk is provided, comprising determining whether a RSAT for a current data recording exists, if the RSAT does not exist, determining whether a user defined pack or data exists, if the user defined pack or data exists, retrieving a start address from the user defined pack or data, reading a navigation pack from the start address, determining whether the data reading for the navigation pack is valid, if the data reading is valid, analyzing the navigation pack and reading unit information from the navigation pack, searching an address of a next VOBU, if the data reading is invalid, creating or updating new management information files and file system data according to the unit information, writing the updated management information files and file system data onto the recordable disk, and writing a new RSAT into a multimedia area on the recordable disk. Further, if the RSAT does not exist, a navigation pack is backward searched from a next writable address for each pack. It is determined whether a navigation pack is located. If a navigation pack is located, a navigation pack of the VOBU is read from an abnormal interrupted position.

A data recovery method for data recording applied to a recordable disk is provided, comprising determining whether an indication such as a start recovery mark is set in the recordable disk, if so, locating a title start address, obtaining a VOBU RDI pack, parsing additional information from an RDI pack to create title information, parsing VOBU recovery information stored in the RDI pack, creating navigation information according to the VOBU recovery information, seeking a next VOBU group, determining whether an identify value in recovery information stored in the RDI pack is correct, if not, forward seeking to a last VOBU group, writing the navigation information to a management file to update a multimedia file, and modifying the indication in the recordable.

A data recovery method for data recording applied to a recordable disk is provided, comprising determined whether a VAT exists in the last VOBU block, if not, backward seeking an RDI pack from the last block of the recordable disk, determining whether an RDI pack exists, if so, parsing VOBU recovery information in the RDI pack, creating navigation information according to the VOBU recovery information, backward seeking to a previous VOBU group, determining whether the current RDI pack is the first RDI pack, if so, parsing additional information in the first VOBU RDI pack to create title information, and writing the navigation information to a management file to update a multimedia file.

A data recovery system for data recording applied to a recordable disk is provided, comprising a determination unit, a retrieve unit, a reading unit, a searching unit, a creation unit, and a writing unit. The determination unit determines whether a RSAT for a current data recording exists, and, if the RSAT does not exist, determining whether a user defined pack or data exists. If the user defined pack or data exists, the retrieve unit retrieves a start address, user settings, and multimedia attributes from the user defined pack or data. The reading unit reads a navigation pack from the start address and unit information from the navigation pack. The searching unit searches an address of a next VOBU. If the data reading is invalid, the creation unit creates or updates new management information files and file system data according to the unit information and the user settings and multimedia attributes. The writing unit writes the updated management information files and file system data onto the recordable disk, and writes a new RSAT into a multimedia area on the recordable disk. Further, if the data reading is invalid, the determination unit backward searches a navigation pack from the next writable address for each pack, and determines whether a navigation pack is located. The reading unit, reads a navigation pack of the VOBU from an abnormal interrupted position

A data recovery system for data recording applied to a recordable disk is provided, comprising a determination unit, a locating unit, an obtaining unit, a parsing unit, a creation unit, a seeking unit, a writing unit, and a reset unit. The determination unit determines whether an indication such as a start recovery mark is set in the recordable disk. The locating unit locates a title start address if the indication is set in the recordable disk. The obtaining unit obtains a VOBU RDI pack. The parsing unit parses additional information from an RDI pack to create title information and VOBU recovery information stored in the RDI pack. The creation unit creates navigation information according to the VOBU recovery information. The seeking unit seeks a next VOBU group and forward seeking to a last VOBU group when an identify value in recovery information stored in the RDI pack is not correct. The writing unit writes the navigation information to a management file to update a multimedia file. The reset unit modifies the indication on the recordable disk.

A data recovery system for data recording applied to a recordable disk is provided, comprising a determination unit, a seeking unit, a parsing unit, a creation unit, and a writing unit. The determination unit determines whether a VAT exists in the last VOBU block. The seeking unit backward seeks an RDI pack from the last block of the recordable disk if the VAT does not exist. The parsing unit parses VOBU recovery information in the RDI pack when an RDI pack exists. The creation unit creates navigation information according to the VOBU recovery information. The seeking unit backward seeks to a previous VOBU group. The determination unit determines whether the current RDI pack is the first RDI pack. If so, the parsing unit parses additional information in the first VOBU RDI pack to create title information. The writing unit writes the navigation information to a management file to update a multimedia file.

A method of data recording capable of data recovery comprises recording a start recovery mark on a storage medium indicating a beginning of data recording, and recording an end recovery mark on the storage medium indicating an end of the data recording.

A detailed description is given in the following embodiments with reference to the accompanying drawings.

### BRIEF DESCRIPTION OF THE DRAWINGS

The invention can be more fully understood by reading the subsequent detailed description and examples with references made to the accompanying drawings, wherein:

Fig. 1 illustrates a conventional data recording procedure for rewritable disks;

Fig. 2 illustrates an exemplary format of a rewritable disk;

Fig. 3 illustrates an exemplary format of a VOBU;

Fig. 4 illustrates an exemplary format of a navigation pack 304;

Fig. 5 is a flowchart of an embodiment of a data recording method for DVD+VR/DVD-VIDEO formats based on DVD-RW/DVD+RW disks;

Fig. 6 is a flowchart of an embodiment of a data recovery method for DVD+VR/DVD-VIDEO formats based on DVD-RW/DVD+RW disks;

Fig. 7 illustrates an exemplary format of a DVD-R/DVD+R disk;

Fig.8 is a flowchart of a normal data recording method for DVD+VR/DVD-VIDEO formats based on DVD-R/DVD+R disks;

Fig. 9A is a flowchart of an embodiment of a data recovery method for DVD+VR/DVD-VIDEO formats based on DVD-R/DVD+R disks, in which user defined pack or data exists;

Fig. 9B is a flowchart of an embodiment of a data recovery method for DVD+VR/DVD-VIDEO fonnats based on DVD-R/DVD+R disks, in which user defined pack or data does not exist;

Fig. 10A is a view diagram of a structure of VOBU recovery information, used to recover VOBU navigation information for DVD-VR formats;

Fig. 10B is a view diagram of VOBU group recovery information, recorded in a real-time data information (RDI) pack;

Fig. 10C is a view diagram of the first the VOBU recovery information of a new title recorded in a VOBU RDI pack;

Fig. 11 is a view diagram of a structure of an RDI pack structure, in which writing recovery information is recorded;

FIG 12 is a view diagram of a format of recovery information recorded in RDI packs;

Fig. 13 is a flowchart of an embodiment of a data recovery method for DVD-VR formats based on a DVD-RW disk;

Fig. 14 is a flowchart of an embodiment of a recovery method for DVD-VR fonnats based on a DVD-R disk;

Fig. 15 illustrates an exemplary format of a rewritable disk for DVD-VR formats based on a DVD-R disk;

### DETAILED DESCRIPTION OF THE INVENTION

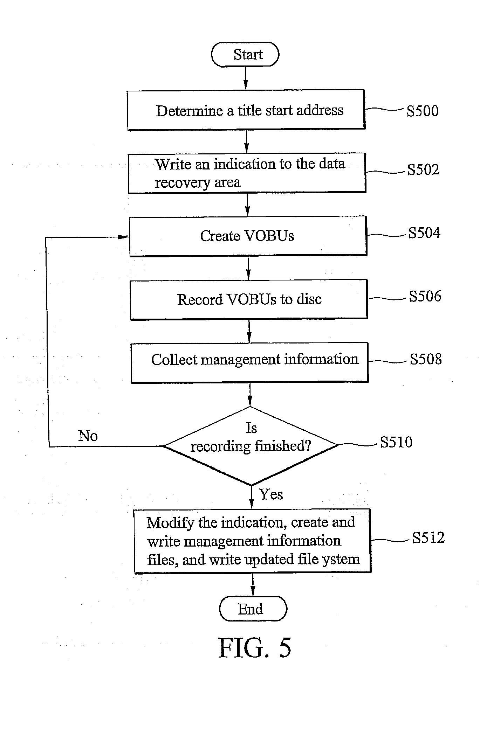

Several exemplary embodiments of the invention are described with reference to Figs. 5 through 19, which generally relate to a recovery mechanism for data recording. It is to be understood that the following disclosure provides many different embodiments as examples, for implementing different features of the invention. Specific examples of components and arrangements are described below to simplify the present disclosure. These are, of course, merely examples and are not intended to be limiting. In addition, the present disclosure may repeat reference numerals and/or letters in the various examples. This repetition is for the purpose of simplicity and clarity and does not in itself dictate a relationship between the various embodiments and/or configurations discussed.

The invention discloses recovery methods and systems for data recording to encounter power failure problems of a recording device.

A data recovery method of the invention is applied to a storage medium. The storage medium can be a recordable or rewritable disk, a hard disk, or other recordable or rewritable media. The data recovery method first checks medium content of the storage medium and determines whether multimedia data is detected on the storage medium. If the multimedia data is detected, it is then determined whether reconstruction of management information associated with the multimedia data is required for the storage medium according to the checking results. If the reconstruction of the management information is required, a recovery process is executed, comprising analyzing the multimedia data to reconstruct the management information, and rewriting the management information to the storage medium.

With respect to data recovery for a recordable or rewritable disk, the invention can be applied to DVD-VIDEO, DVD-VR, and DVD+VR formats for optical storage medium, comprising DVD-R, DVD+R, DVD-RW, DVD+RW, and DVD-RAM, or hard disks. It is noted that DVD+VR formats comply with the DVD+RW Video Format Specifications and the DVD+R Video Format Specifications. DVD-VR formats comply with the DVD Specifications for DVD-RAM/DVD-RW/DVD-R for General Discs Part 3 VIDEO RECORDING. DVD-VIDEO formats comply with the DVD Specifications for Read-Only Disc Part 3 Video Specifications.

The following describes a data recovery method for DVD+VR/DVD-VIDEO formats based on DVD-RW/DVD+RW disks.

Fig. 5 is a flowchart of an embodiment of a data recording method for DVD+VR/DVD-VIDEO formats based on DVD-RW/DVD+RW disks. When a rewritable disk is inserted in a recorder for multimedia data recording, a title start address, corresponding to a title of the rewritable disk, is determined (step S500). The rewritable disk is formatted according to DVD+VR/DVD-VIDEO formats for DVD+RW/DVD-RW standards. The rewritable disk contains a file system area, a management information area, a data recovery area, and VOBs. The data recovery area could be located in an unused area of the rewritable disk. The unused area could be the same as defined by DVD+RW or DVD-RW standards.

An indication (such as a start recovery mark) is written to the data recovery area based on the title start address (step S502). For example, the indication can be the title start address or a signal to indicate the recording situation, such as recording success or failure.

If the indication is the title start address, it can be retrieved directly for recovery. If the indication is a signal, it can be retrieved and interpreted for recovery.

Multimedia data is then recorded to the VOBs. For data recording, the multimedia data is compressed into video object units (VOBUs) (step S504). The VOBUs are recorded onto the rewritable disk according to the title start address (step S506). Management information is collected from the recorded video object units (step S508). Management information includes first information for the management information area and second information for the file system area. The first information is collected mainly from the VOBUs to generate information files and may include, for example, video manager information (VMGI) and video title set information (VTSI). The second information may include the updated and other system information related to the recorded data.

If the multimedia data recording is finished (step S510), the indication is modified from the data recovery area. If not, go to step S504. Another exemplary embodiment is to write an end recovery mark representing the recording is complete, wherein this end recovery mark may be recorded at a different or the same position with respect to a start recovery mark recorded at the beginning of data recording. An advantage of recording the start and end recovery marks at different positions is to prevent damage to the storage medium due to repeatedly writing at the same position. After the indication is modified or after the end recovery mark is recorded, the management information files are created and written to the management information area and the updated file system data is written (step S512). As mentioned, the management information includes first information for the management information area and second information for the file system area. The management information is collected in step S508, information files are then created according to the collected management information. The information files may include video manager information (VMGI), video title set information (VTSI), and program chain information files (PGCI). The management information area is updated using the created information files. The second information is created according to the updated management information area and the VOBs. The created second information is written to the file system area.

Comparing Fig. 1 and Fig. 5, an indication is written to an unused area of the rewritable disk for data recovery in Fig. 5. Thus, if an unexpected termination occurs during data recording (for example, due to power failure), the indication is left in the data recovery area, or in another embodiments where start and end recovery marks are recorded at the beginning and end of data recording respectively, the end recovery mark is missing. Furthermore, in some other embodiment, the indication is modified when the data recording process is complete, so that reading the indication may help on determining whether data recovery is required.

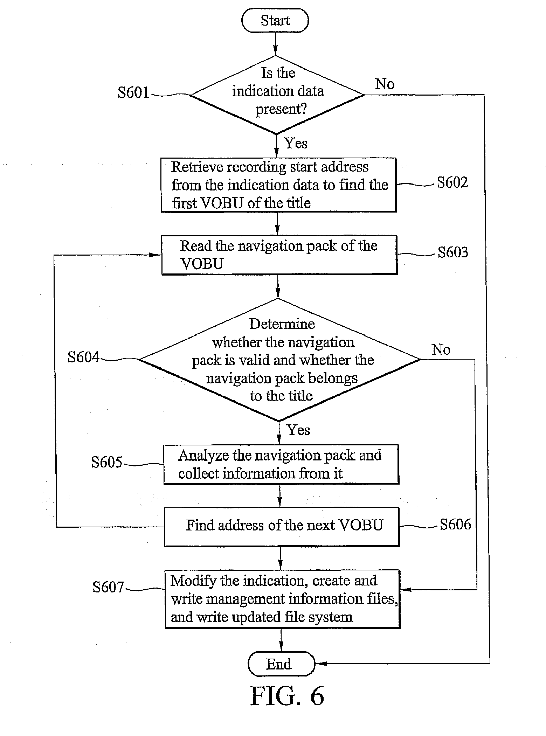

Fig. 6 is a flowchart of an embodiment of a data recovery method for DVD+VR/DVD-VIDEO formats based on DVD-RW/DVD+RW disks. It is determined whether indication data is present (step S601). If no indication is present, data recovery is not required. If indication is present, the recording start address is retrieved from the indication to find the first VOBU of the title (step S602). The navigation pack is read from the VOBU (step S603). The VOBU stores unit information.

It is determined whether the navigation pack is valid and whether the navigation pack belongs to the title (step S604).

If the navigation pack is valid and belongs to the title, analyzing the navigation pack and collecting information therefrom is repeatedly executed until the navigation pack is not valid (step S605), and an address of the next VOBU is found (step S606). If the navigation pack is not valid and does not belong to the title, new management information files are created and written and updated file system data is written (step S607).

The following describes a data recovery method for DVD+VR/DVD-VIDEO formats based on DVD-R/DVD+R disks.

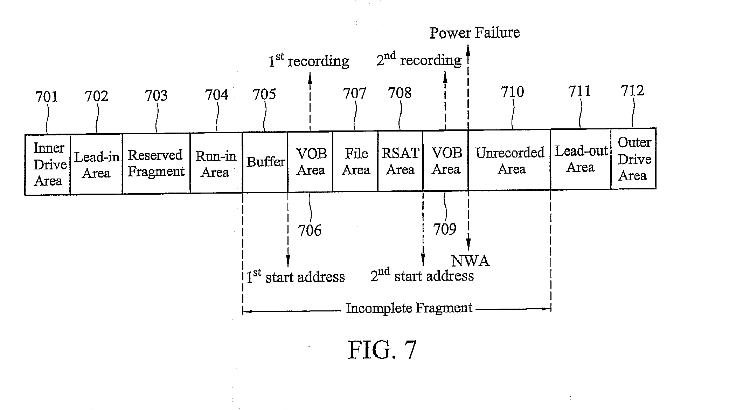

Fig. 7 illustrates an exemplary format of a DVD-R/DVD+R disk.

With respect to a recordable disk, a reserved area 703 is provided at the inner of the disk based on DVD-R/DVD+R standards, as shown in Fig. 7. When a recording is implemented on a DVD-R/DVD+R disk, multimedia data (VOBs) is written in a recordable position (VOB area 706) with a minimum address from an inner drive area 701 of the disk. When the multimedia data recording is finished, management information files and file system data are recorded in file area 707, following VOB area 706.

A reserved space allocation table (RSAT), only applied to DVD+VR/DVD-VIDEO formats of a DVD-R/DVD+R disk, is then recorded in RSAT area 708, following file area 707. Based on the DVD+VR specification, the RSAT is provided to treat a reserved fragment 703 of an open video session as a virtual rewritable area of 31 megabytes (MB). When the disk is finalized, the RSAT can be used to search data requiring to be copied to reserved fragment 703.

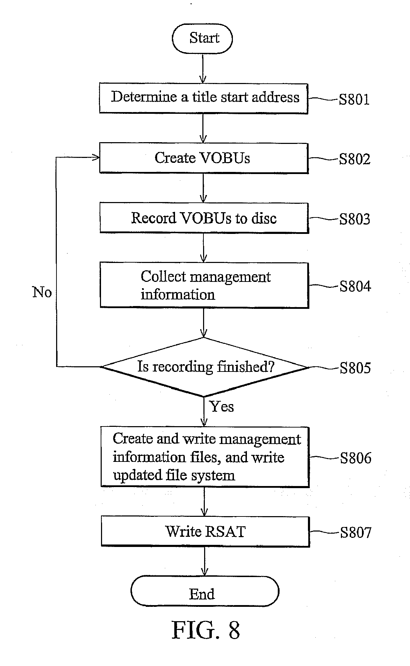

Fig. 8 is a flowchart of a normal data recording method for DVD+VR/DVD-VIDEO formats based on DVD-R/DVD+R disks.

A title start address is determined (step S801). When a new title is recorded, a next writeable address (NWA) must be located to serve as a start address of the new title. As shown in Fig. 7, when the first recording is finished, the address at the end of RSAT area 708 serves as a NWA (2^{nd} start address) of a new title, and another recording (2^{nd} recording) with multimedia data starts from the NWA. Multimedia data is then recorded to VOB area 709, compressed to create VOBUs (step S802). VOBUs are recorded to the disk sequentially. Management information is collected from the recorded VOBUs (step S803). The management information is applied to update the management information files and file system data when the recording terminates.

Next, it is determined whether the recording (2^{nd} recording hereafter) of the disk is finished (step S805). If not, the process proceeds to step S802. If so, the recording stops at a 16-sector boundary. The area starting at PSN (034000h) to the end of the 2^{nd} recording complies with the VTS title video object set (VTSTT_VOBS) specifications as defined in the DVD+RW Video Specifications. The previously written management information files (VTSI, VMGI, and VRMI files), file system data, and the recorded RSAT (the first RSAT) are fully absorbed by the new VTSTT_VOBS. Thus, when the recording (2^{nd} recording herein) of the disk is complete, new management information files are created and written and updated file system data (for 2^{nd} recording) is written according to the management information (step S806). A new RSAT is recorded in RSAT area 711 of the disk (step S807) and therefore a new NWA is located following RSAT area 711. Then, the recording is finished.

Referring to Fig. 7, when the data recording finishes abnormally (due to power failure, for example), the recording device cannot write management files, file system data, and RSAT onto the disk, such that a multimedia player cannot play the disk. To avoid such problem, the user defined pack or data can be added to VOBUs during the data recording to comprise the recording start address. The user defined data can be put in the NV_PCK reserved field. Next, it is determined whether a disk requires executing a recovery process according to the user defined pack or data, and, if so, the recovery process is executed.

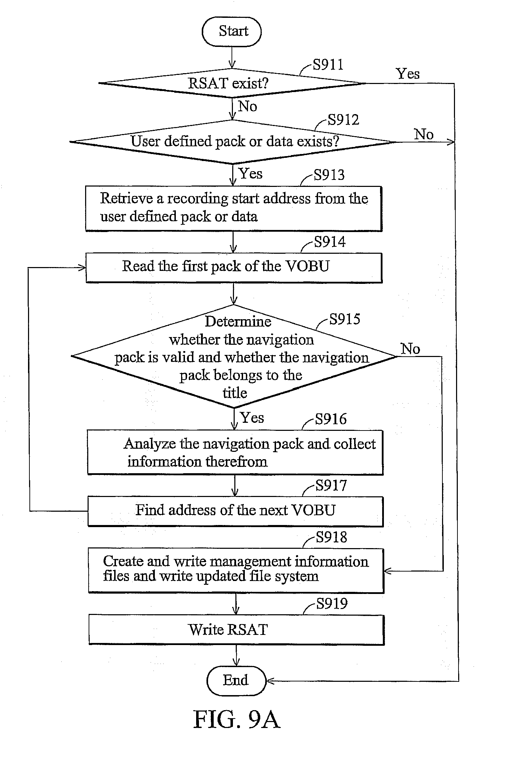

Fig. 9A is a flowchart of an embodiment of a data recovery method for DVD+VR/DVD-VIDEO formats based on DVD-R/DVD+R disks, in which user defined pack or data exists.

It is determined whether a RSAT for the current data recording exists (step S911), indicating the RSAT is backward located from a next writable address (NWA). If the RSAT for the current data recording exists, the recovery process is not required and terminates. If the RSAT for the current data recording does not exist, it is then determined whether a user defined pack or data exists (step S912), indicating the user defined pack or data is further backward located from the NWA. If the user defined pack or data for the current data recording does not exist, the disk cannot be recovered and the recovery process terminates. If the user defined pack or data for the current data recording exists, indicating an abnormal interrupt occurs, a recording start address is retrieved from the user defined pack or data (step S913). Another RSAT for the previous data recording may be located from the recording start address, and previously generated management information files and file system data can thus be located according to the previous RSAT. If the previously generated management information files and file system data cannot be located, indicating there was only one recording on the disc, and the disk was abnormally interrupted. New management information files and file system data are generated only if the recovery process is finished. Additionally, the previously generated management information files and file system data located must be updated as the recovery process is complete.

Next, a navigation pack (the first pack) of the first VOBU of the recording is read from the recording start address. A navigation pack belonging to the current data recording is read from a multimedia area (VOB area 706) (step S914). It is determined whether the navigation pack is valid and whether the navigation pack belongs to the title (step S915). If the data reading is valid, the navigation pack is analyzed and read and unit information is collected from the navigation pack (step S916). Next, an address of the next VOBU is found (step S917), and the process proceeds to step S914. The reading and collecting are repeatedly executed until no more navigation pack can be read. If the data reading is invalid, new management information files and file system data are created or updated according to the collected unit information, and the updated management information files and file system data are written onto the disk (step S918). Next, a new RSAT is written into the RSAT area on the disk (step S919) and the process terminates.

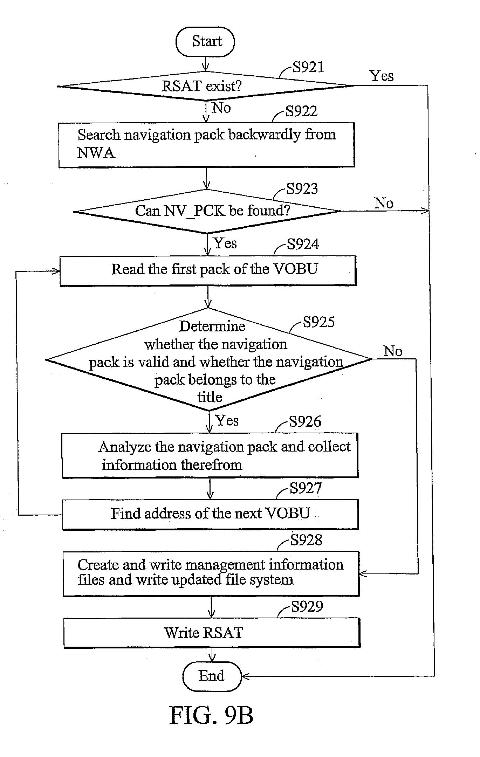

Fig. 9B is a flowchart of an embodiment of a data recovery method for DVD+VR/DVD-VIDEO formats based on DVD-R/DVD+R disks, in which user defined pack or data does not exist.

It is determined whether a RSAT for the current data recording exists (step S921). The RSAT is backward located from a next writable address (NWA). If the RSAT for the current data recording exists, the recovery process is not required and terminates. If the RSAT for the current data recording does not exist, a navigation pack (NV_PCK) is backward located from the next writable address for each pack, repeating the locating unless the last recording RSAT or inner drive area 701 of the disk is located (step S922), and it is then determined whether a navigation pack can be found (step S923). If not, the disk cannot be recovered and the recovery process terminates. If so, a navigation pack (the first pack) of the VOBU is read from the abnormal interrupted position (the power failure position) (step S924). A navigation pack belonging to the current data recording is read from a multimedia area (VOB area 706). It is determined the navigation pack is valid and whether the navigation pack belongs to the title (step S925). If the data reading is valid, the navigation pack is analyzed and read and unit information is collected from the navigation pack (step S926). Next, an address of the next VOBU is found (step S927), and the process proceeds to step S924. The reading and collecting are repeatedly executed until no more navigation pack can be read. If the data reading is invalid, new management information files and file system data are created or updated according to the collected unit information, and the updated management information files and file system data are written onto the disk (step S928). Next, a new RSAT is written into the RSAT area on the disk (step S929) and the process terminates.

The following first describes a data recovery method for DVD-VR formats based on a DVD-RW disk.

During a recording, VOBUs are recorded to a record carrier using an asynchronous streaming writing method, while navigation information for the data streams are kept in a volatile memory using a prescriptive structure defined in DVD specifications. Required information for a title includes title information (record time, title name, video quality, video and audio attributes and so on) and VOBU information. To recover a title, recovery information must be retrieved to reconstruct navigation information. Additionally, the recovery information is located in each VOBU's RDI pack and recorded in a record carrier together with data streams. When powering up, the recovery information is retrieved from the record carrier to recover the last title.

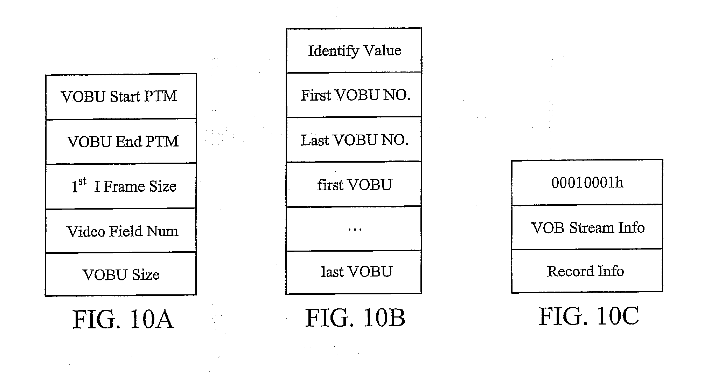

Fig. 10 is a view diagram of recovery information structures of video object units (VOBUs) for reconstruction of navigation information.

Fig. 10A is a view diagram of a structure of VOBU recovery information, used to recover VOBU navigation information for DVD-VR formats. VOBU information comprises a start play time of a VOBU (VOBU start PTM), an end play time of a VOBU (VOBU end PTM), a size of the first I frame (the 1^{st} I frame size), a number of video fields (Video Field Num.), and the VOBU size.

Fig. 10B is a view diagram of VOBU group recovery information of a VOBU group, recorded in a real-time data information (RDI) pack, only applied to DVD-VR formats of a DVD-RW disk. Each VOBU RDI pack records information of a previous VOBU and recovery information thereof, such that information of previous VOBUs can be retrieved from the current VOBU RDI pack. AN RDI pack comprises an identity value, a first VOBU number (NO.) in a VOBU group, a last VOBU number in the VOBU group, and VOBU recovery information from the first VOBU NO. to the last VOBU NO.. The identity value is used to determine whether the VOBU belongs to a recovery title. Each title has an exclusive start address from the LB of VR_MOVIE.VRO. The address is equal to the size of the number of total packs for all the whole previous titles. Thus, during a recording, an address of a new title is added to an RDI pack to serve as an identify value. If the recording is interrupted by power failure, a calculated value can be compared with the identify value, and, if the same, the current VOBU belongs to the last recording title and recovery information can be retrieved from the RDI pack and build the navigation information. The "first VOBU NO." is the first VOBU number recorded in the recovery information group in an RDI pack. The "last VOBU NO." is the last VOBU number recorded in the recovery information group. The two numbers are used to determine the current VOBU's position and how many VOBU recovery information groups are included in the current RDI pack.

Fig. 10C is a view diagram of the first VOBU recovery information group of a new title recorded in a VOBU RDI pack.

The first VOBU of a title comprises additional information to recover title information. The additional information provides user settings and multimedia attributes, such as title names, record time, video attributes, audio attributes, video quality, and so forth, used to create new title information. "00010001h" is used to determine whether a current VOBU is the first one.

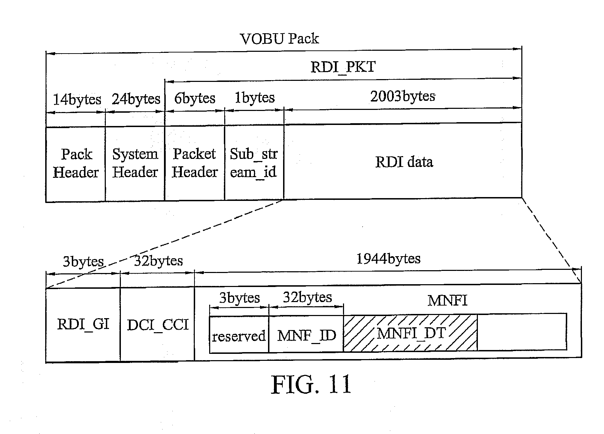

Fig. 11 is a view diagram of a structure of an RDI pack structure, in which writing recovery information is recorded.

An RDI pack comprises a pack header, a system header, an RDI pack header, a Sub_Stream_Id, and RDI data. The RDI data comprises real-time general information (RDI_GI), display control and copy control information (DCI_CCI), and manufacture information (MNFI). MNFI comprises manufacture identification (MNF_ID) and manufacture information data (MNFI_DT). Recovery information can be added to MNFI_DT. The position of MNFI_DT from the first byte of the RDI pack is identical to each VOBU, such that the recovery information can be set and obtained from the same position.

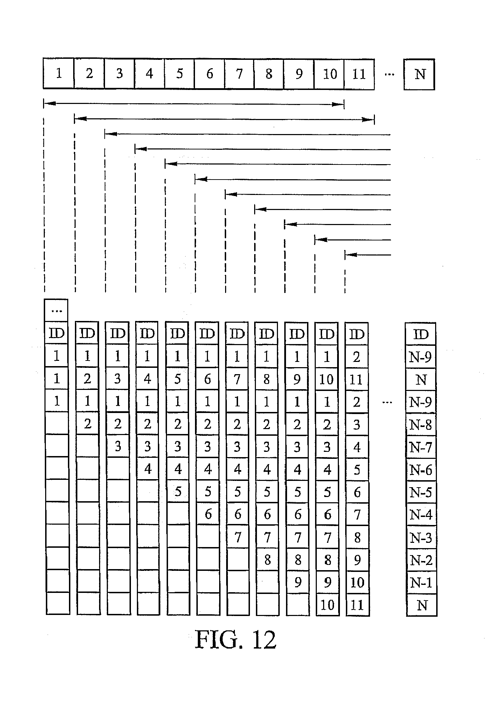

Fig. 12 is a view diagram of a format of recovery information recorded in RDI packs, providing a plurality of RDI packs (1..N) representing the real format of recovery information group, where N is the total VOBU number for the last recording. Ten or less VOBUs of recovery information are set as a group. Since each title start address is exclusive, a first VOBU RDI pack can be retrieved from a file system, and recovery information of the first VOBU can be obtained and utilized to create the title and fill VOBU navigation information. A DVD disk serves as a record carrier with stream reading speed in 16 packs unit faster than 1 pack, such that the first VOBU size can be obtained and allowed in the 16 pack alignment. A value is calculated as an average size for the VOBUs. With respect to the next recovery information, a desired RDI pack is sought from the current position according to the calculated value (average size * 10). If the desired RDI pack is not included in the current 16 packs, another 16 packs are forward sought. When the RDI pack is located, recovery information for the VOBUs group is parsed and navigation information is filled. Next, the average size is calculated according to the size of VOBUs and the next information is continuously searched.

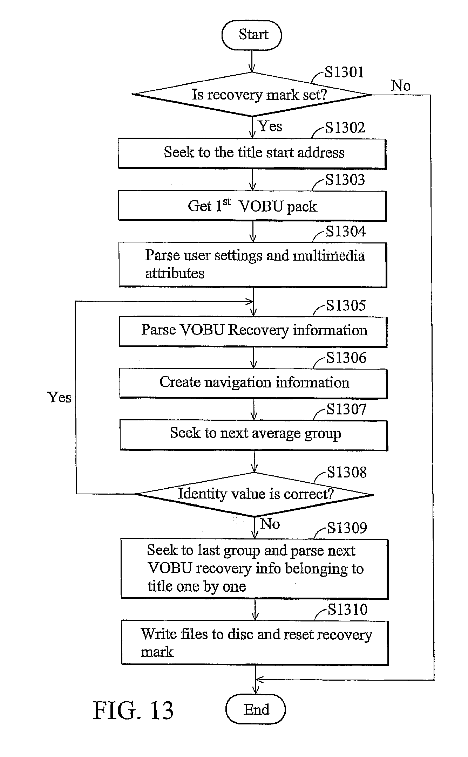

Fig. 13 is a flowchart of an embodiment of a data recovery method for DVD-VR formats based on a DVD-RW disk.

A disk is first identified to determine whether a recovery mark is set therein for recovery (Step S1301). If not, a recovery process for the disk is not required and the process terminates. If so, a title start address is located (Step S1302) and the first VOBU RDI pack is obtained (Step S1303). An RDI pack is the first VOBU pack, such that the first VOBU RDI pack address is identical to the title start address. Next, additional information, such as user settings and multimedia attributes, is stored in the first VOBU RDI pack and is parsed from the first RDI pack to create title information (Step S1304), as shown in Fig. 10C. Next, VOBU recovery information stored in the RDI pack is parsed (Step S1305). If the VOBU RDI pack is not the first pack, it is stored by a group of VOBU recovery information (referring to Fig. 12). The whole VOBU recovery information is parsed. Navigation information is created according to the VOBU recovery information (Step S1306). The next group of VOBUs is sought (Step S1307), referring to Fig. 12 for VOBU average size * 10.

Next, it is determined whether the identify value (as shown in Fig. 10C) in recovery information stored in the RDI pack is correct (Step S1308). If so, indicating the VOBUs belong to the current recovering title, the process proceeds to step 1305. If not, the previous VOBU group is the last VOBU group for the current recovering title. Next, forward seeking to the last VOBU group is executed (Step S1309). In the previous RDI pack, the last parsed VOBU's size can be obtained, thus obtaining the address of the next VOBU. Seeking to the next VOBU is executed according to the last parsed VOBU's size and it is determined whether the identify value is correct. If so, the current VOBU information is parsed and seeking the next VOBU is further executed. If the identify value is not correct, the recorded VOBUs have been parsed to navigation information. The navigation information is written to a management file (VR_MANGR.IFO) to update a multimedia file (VR_MOVIE.VRO) (Step S1310).

The recovery time can be estimated using the described recovery method. Originally, title duration is one minute and recovery duration is about 2.8 to 3.5 seconds. A recording of one hour may take 168 to 210 seconds to be recovered. The duration does not include the time needed to flush file to the disk. As described, a recovery method of the invention recovers the last recording from power failure, implemented by setting a recovery mark at beginning of a recording, and recovery information structures are stored into RDI packs during the recording. Thus, the recovery for a data recording can be achieved without restarting the overall recording and any other additional device. The recording device can record and recover the information only by the record carrier.

The invention is not limited to the specific recovery information structure shown in Fig. 10. The invention is applicable to any record carrier or medium. Any kind of the recovery information structure can be implemented as long as the recovery information can be retrieved on the basis of seeking RDI pack way and the recovery mark is recorded on the record carrier. The invention provides a recovery mechanism that can refer only the information on the storage medium itself (such as a disk) and thus avoiding utilizing a non-volatile random access memory for data recovery. For examples, the recovery mark and recovery information are both recorded on the disk.

The embodiment avoids wasting space of a storage medium. The recovery information is recorded into the manufacturer's information data flied in RDI pack. There is no need to use private sectors in the storage medium. The embodiment enables users to recover the fail disk anytime and tray out the disk without any limitation during loading disk. The indication is stored in the disk so it is independence to the recording device or any non-volatile random access memory, which implies that the disk may be recovered by any other recording device. Furthermore, the embodiments may increase the recovery speed without depending on non-volatile random access memory and private data streams.

When a data recording is required, an indication such as a start recovery mark is set or recorded on the storage medium (e.g. a rewritable disk). During recording, the recovery information, which is used to recovery the navigation information, is recorded to an RDI pack. At the end of the recording, the indication is deleted or modified, or in some embodiments, an end recovery mark is recorded on the storage medium. If power failure happens during recording, after power-up, by detecting or investigating the indication, the recording device determines whether the storage medium requires data recovery. If so, the start address of the stream file (VR_MOVIE.VRO for a DVD-VR operation) for recovery can be obtained by the file system. According to the whole recovery information, the last recording information can be recovered.

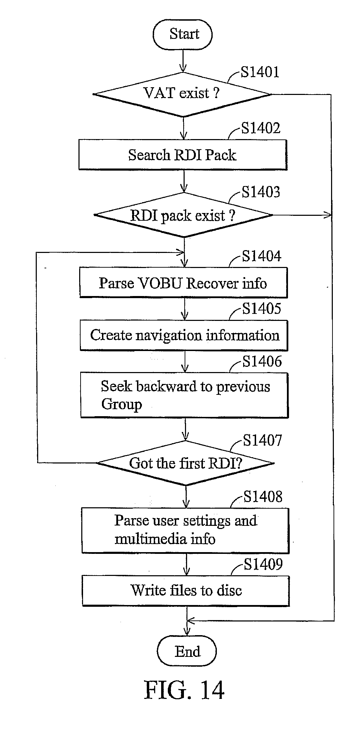

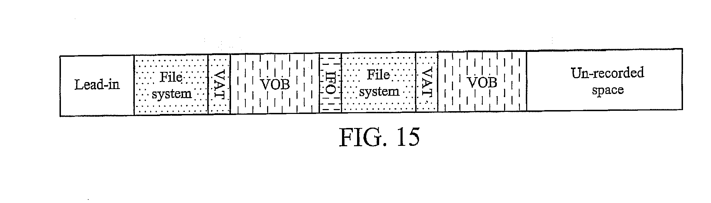

Fig. 14 is a flowchart of an embodiment of a recovery method for DVD-VR formats based on a DVD-R disk. Fig. 15 illustrates an exemplary format of a rewritable disk for DVD-VR formats based on a DVD-R disk.

Referring to Figs. 14 and 15, when a disk is identified, it is determined whether the VAT exists in the last VOBU block (Step S1401). If so, indicating recovery for the disk is not required, the process terminates. If not, backward seeking the first RDI pack from the last VOBU block of the disk is executed (Step S1402). It is determined whether an RDI pack exists (Step S1403). If not, indicating recovery for the disk is not required, the process terminates. If so, VOBU recovery information in the RDI pack is parsed (Step S1404). If the RDI pack is not the fist one according to the parsed VOBU recovery information, it is stored by a group of VOBU recovery information. The whole VOBU recovery information is parsed. Next, navigation information is created according to the VOBU recovery information (Step S1405). Backward seeking to the previous group of VOBUs (referring to a group of VOUBs recovery information) is executed (Step S1406). It is determined whether the current RDI pack is the first RDI pack of the title (Step S1407). If not, the process proceeds to step S1404. If so, additional information such as user settings and multimedia attributes stored in the first VOBU RDI pack are parsed to create title information (Step S1408). The navigation information is written to VR_MANGR.IFO file to update VR_MOVIE.VRO file (Step S1409).

A data recording system for rewritable or recordable disks includes a data recording subsystem and a recovery subsystem. The data recording subsystem records multimedia data to a rewritable disk, and the rewritable disk may be formatted according to DVD-R, DVD+R, DVD-RW, or DVD+RW standards. The recovery subsystem is capable of recovering the multimedia data if the multimedia data recording is terminated unexpectedly.

The following describes an embodiment of a data recovery system for DVD+VR/DVD-VIDEO formats based on DVD-R/DVD+R disks.

A data recovery system comprises a determination unit, a retrieve unit, a reading unit, a record unit, a searching unit, a creation unit, and a writing unit. The determination unit determines whether a RSAT for a current data recording exists, and, if the RSAT does not exist, determining whether a user defined pack or data exists. If the user defined pack or data exists, the retrieve unit retrieves a start address, user settings, and multimedia attributes from the user defined pack or data. The reading unit reads a navigation pack from the start address and unit information from the navigation pack. The record unit records the navigation pack belonging to the current data recording from the multimedia area. The searching unit searches an address of a next VOBU. If the data reading is invalid, the creation unit creates or updates new management information files and file system data. The writing unit writes the updated management information files and file system data onto the recordable disk, and writes a new RSAT into a multimedia area on the recordable disk.

The following describes an embodiment of a data recovery system for DVD-VR formats based on a DVD-RW disk.

A data recovery system of the invention comprises a determination unit, a locating unit, an obtaining unit, a parsing unit, a creation unit, a seeking unit, a writing unit, and a reset unit. The determination unit determines whether an indication is set in the recordable disk. The locating unit locates a title start address if the indication is set in the recordable disk. The obtaining unit obtains a VOBU RDI pack. The parsing unit parses additional information from an RDI pack to create title information and VOBU recovery information stored in the RDI pack. The creation unit creates navigation information according to the VOBU recovery information. The seeking unit seeks a next VOBU group and forward seeking to a last VOBU group when an identify value in recovery information stored in the RDI pack is not correct. The writing unit writes the navigation information to a management file to update a multimedia file. The reset unit modifies the indication on the recordable disk.

The following describes an embodiment of a recovery system for DVD-VR formats based on a DVD-R disk.

A data recovery system of the invention comprises a determination unit, a seeking unit, a parsing unit, a creation unit, and a writing unit. The determination unit determines whether a VAT exists in the last VOBU block. The seeking unit backward seeks the first RDI pack from the last block of the recordable disk if the VAT does not exist. The parsing unit parses VOBU recovery information in the RDI pack when an RDI pack exists. The creation unit creates navigation information according to the VOBU recovery information. The seeding unit backward seeks to a previous VOBU group. The determination unit determines whether the current RDI pack is the first RDI pack. If so, the parsing unit parses additional information in the first VOBU RDI pack to create title information. The writing unit writes the navigation information to a management file to update a multimedia file.

While the invention has been described by way of example and in terms of the preferred embodiments, it is to be understood that the invention is not limited to the disclosed embodiments. To the contrary, it is intended to cover various modifications and similar arrangements (as would be apparent to those skilled in the art). Therefore, the scope of the appended claims should be accorded the broadest interpretation so as to encompass all such modifications and similar arrangements.

## Claims

1. A data recovery method for data recording, applied to a storage medium, comprising:
checking whether multimedia data is detected on the storage medium;
if the multimedia data is detected, determining whether reconstruction of management information associated with the multimedia data is required for the storage medium according to the checking results; and
if the reconstruction of the management information is required, executing a recovery process.

2. The data recovery method as claimed in claim 1, wherein determining the reconstruction of management information comprises detecting the existence of an end recovery mark recorded at an end of data recording.

3. The data recovery method as claimed in claim 1, the recovery process further comprises:
analyzing the multimedia data to reconstruct the management information; and
rewriting the management information to the storage medium.

4. The data recovery method as claimed in claim 1, wherein the storage medium is recordable or rewritable disk, a hard disk, or other recordable or rewritable media.

5. The data recovery method as claimed in claim 1, wherein the recovery process further comprises:
determining whether a RSAT for a current data recording exists;
if the RSAT does not exist, determining whether a user defined pack or data exists;
if the user defined pack or data exists, retrieving a start address from the user defined pack or data;
reading a navigation pack from the start address;
determining whether the data reading for the navigation pack is valid;
if the data reading is valid, analyzing the navigation pack and reading unit information from the navigation pack; and
searching an address of a next VOBU.

6. The data recovery method as claimed in claim 5, wherein the recovery process further comprises:
if the data reading is invalid, creating or updating new management information files and file system data according to the unit information; and
writing the updated management information files and file system data onto a recordable disk; and
writing a new RSAT into a multimedia area on the recordable disk.

7. The data recovery method as claimed in claim 5, wherein the recovery process further comprises:
if the RSAT does not exist, backward searching a navigation pack from a next writable address for each pack;
determining whether a navigation pack is located; and
if a navigation pack is located, reading a navigation pack of the VOBU from an abnormal interrupted position.

8. The data recovery method as claimed in claim 5, wherein the recovery process further comprises backward locating the RSAT from a next writable address (NWA).

9. The data recovery method as claimed in claim 5, wherein the recovery process is not required to the recordable disk and terminates if the RSAT exists.

10. The data recovery method as claimed in claim 9, wherein the recovery process further comprises backward locating the user defined pack or data from the NWA if the RSAT does not exist.

11. The data recovery method as claimed in claim 5, wherein the recordable disk cannot be recovered, if the user defined pack or data does not exist, and the recovery process terminates.

12. The data recovery method as claimed in claim 5, wherein the recovery process further comprises:
locating a RSAT for a previous data recording from the start address;
located previously generated management information files and file system data according to the RSAT;
if the previously generated management information files and file system data cannot be located, generating new management information files and file system data;
updating the previously generated management information files and file system data located.

13. The data recovery method as claimed in claim 5, wherein the recovery process further comprises reading and collecting the navigation pack belonging to the current data recording from the multimedia area.

14. The data recovery method as claimed in claim 5, wherein the reading and collecting are repeatedly executed until no more navigation pack can be read.

15. The data recovery method as claimed in claim 5, wherein the recovery process is applied to DVD+VR/DVD-VIDEO formats based on DVD-R/DVD+R disks.

16. The data recovery method as claimed in claim 1, wherein the recovery process further comprises:
determining whether an indication is set in a rewritable disk;
if so, locating a title start address;
obtaining a VOBU RDI pack;
parsing additional information from an RDI pack to create title information;
parsing VOBU recovery information stored in the RDI pack;
creating navigation information according to the VOBU recovery information; seeking a next VOBU group;
determining whether an identify value in recovery information stored in the RDI pack is correct;
if not, forward seeking to a last VOBU group;
writing the navigation information to a management file to update a multimedia file; and
modifying the indication in the recordable.

17. The data recovery method as claimed in claim 16, wherein the additional information comprises user settings and multimedia attributes.

18. The data recovery method as claimed in claim 16, wherein the VOBU group seeking further comprises:
obtaining a last parsed VOBU's size in the previous RDI pack, thereby obtaining the address of the next VOBU;
seeking to the next VOBU according to the last parsed VOBU's size;
determining whether the identify value is correct;
if so, parsing the current VOBU information and seeking the next VOBU; and
if not, parsing the recorded VOBUs to the navigation information.

19. The data recovery method as claimed in claim 16, wherein the recovery process is applied to DVD-VR formats based on a DVD-RW disk.

20. The data recovery method as claimed in claim 1, wherein the recovery process further comprises:
determined whether a VAT exists in the last VOBU block;
if not, backward seeking an RDI pack from the last block of a recordable disk;
determining whether an RDI pack exists;
if so, parsing VOBU recovery information in the RDI pack;
creating navigation information according to the VOBU recovery information;
backward seeking to a previous VOBU group;
determining whether the current RDI pack is the first RDI pack;
If so, parsing additional information in the first VOBU RDI pack to create title information; and
writing the navigation information to a management file to update a multimedia file..

21. The data recovery method as claimed in claim 20, wherein the additional information comprises user settings and multimedia attributes.

22. The data recovery method as claimed in claim 20, wherein the recovery process is applied to DVD-VR formats based on a DVD-R disk.

23. A data recovery system for data recording, applied to a storage medium, comprising:
a data recording system, executing data recording to the storage medium; and
a recovery subsystem, coupled to the data recording system, checking whether multimedia data is detected on the storage medium, if the multimedia data is detected, determining whether reconstruction of management information associated with the multimedia data is required for the storage medium according to the checking results, and if the reconstruction of the management information is required, executing a recovery process.

24. The data recovery system as claimed in claim 23, wherein the recovery subsystem further analyzes the multimedia data to reconstruct the management information and rewrites the management information to the storage medium.

25. The data recovery system as claimed in claim 23, wherein the storage medium is recordable or rewritable disk, a hard disk, or other recordable or rewritable media.

26. The data recovery system as claimed in claim 23, the recovery subsystem comprises:
a determination unit, determining whether a RSAT for a current data recording exists, and, if the RSAT does not exist, determining whether a user defined pack or data exists;
a retrieve unit, if the user defined pack or data exists, retrieving a start address from the user defined pack or data;
a reading unit, reading a navigation pack from the start address and unit information from the navigation pack; and
a searching unit, searching an address of a next VOBU.

27. The data recovery system as claimed in claim 26, further comprising:
a creation unit, if the data reading is invalid, creating or updating new management information files and file system data according to the unit information; and
a writing unit, writing the updated management information files and file system data onto a recordable disk, and writing a new RSAT into a multimedia area on the recordable disk.

28. The data recovery system as claimed in claim 26, further comprising:
the determination unit, if the data reading is invalid, backward searches a navigation pack from the next writable address for each pack, and determines whether a navigation pack is located;
the reading unit, reads a navigation pack of the VOBU from an abnormal interrupted position.

29. The data recovery system as claimed in claim 26, wherein the RSAT is backward located from a next writable address (NWA).

30. The data recovery system as claimed in claim 26, wherein the recovery process is not required to the recordable disk and terminates if the RSAT exists.

31. The data recovery system as claimed in claim 30, wherein the user defined pack or data is backward located from the NWA if the RSAT does not exist.

32. The data recovery system as claimed in claim 26, wherein the recordable disk cannot be recovered, if the user defined pack or data does not exist, and the recovery process terminates.

33. The data recovery system as claimed in claim 26, further comprising a record unit, recording the navigation pack belonging to the current data recording from the multimedia area.

34. The data recovery system to as claimed in claim 26, wherein the recovery process is applied to DVD+VR/DVD-VIDEO formats based on DVD-R/DVD+R disks.

35. The data recovery system as claimed in claim 23, the recovery subsystem comprises:
a determination unit, determining whether an indication is set in a rewritable disk;
a locating unit, locating a title start address if the indication is set in the recordable disk;
an obtaining unit, obtaining a VOBU RDI pack;
a parsing unit, parsing additional information from an RDI pack to create title information and VOBU recovery information stored in the RDI pack;
a creation unit, creating navigation information according to the VOBU recovery information;
a seeking unit, seeking a next VOBU group and forward seeking to a last VOBU group when an identify value in recovery information stored in the RDI pack is not correct;
a writing unit, writing the navigation information to a management file to update a multimedia file; and
a reset unit, modifying the indication in the recordable.

36. The data recovery system as claimed in claim 35, wherein the additional information comprises user settings and multimedia attributes.

37. The data recovery system as claimed in claim 35, wherein:
the obtaining obtains a last parsed VOBU's size in the previous RDI pack, thereby obtaining the address of the next VOBU;
the seeking unit seeks to the next VOBU according to the last parsed VOBU's size;
the determination unit determines whether the identify value is correct; and
the parsing unit parsing the current VOBU information and seeking the next VOBU if the identify value is correct, and, if not, parsing the recorded VOBUs to the navigation information.

38. The data recovery system as claimed in claim 37, wherein the recovery process is applied to DVD-VR formats based on a DVD-RW disk.

39. The data recovery system as claimed in claim 23, the recovery subsystem comprises:
a determination unit, determining whether a VAT exists in the last VOBU block;
a seeking unit, backward seeking an RDI pack from the last block of a recordable disk if the VAT does not exist;
a parsing unit, parsing VOBU recovery information in the RDI pack when an RDI pack exists;
a creation unit, creating navigation information according to the VOBU recovery information;
a writing unit; and
a reset unit;
wherein the seeking unit backward seeks to a previous VOBU group, the determination unit determines whether the current RDI pack is the firstRDI pack, if so, the parsing unit parses additional information in the first VOBU RDI pack to create title information, the writing unit writes the navigation information to a management file to update a multimedia file, and the reset unit modifies the indication in the recordable.

40. The data recovery system as claimed in claim 39, wherein the additional information comprises user settings and multimedia attributes.

41. The data recovery system as claimed in claim 39, wherein the recovery process is applied to DVD-VR formats based on a DVD-R disk.

42. A method of data recording capable of data recovery, comprising:
recording a start recovery mark on a storage medium indicating a beginning of data recording; and
recording an end recovery mark on the storage medium indicating an end of the data recording.
